# EUROPÄISCHE PATENTSCHRIFT

(11) **EP 4 141 254 B1**
(45) Veröffentlichungstag und Bekanntmachung des Hinweises auf die Patenterteilung: **10.07.2024**
(21) Anmeldenummer: 21192622.5
(22) Anmeldetag: 23.08.2021
(51) Int. Cl.: F03D 9/32

(54) **FAHRZEUG, ANHÄNGER UND FLUGZEUG ENTHALTEND EIN ENERGIEUMWANDLUNGSSYSTEM ZUM UMWANDELN VON WINDENERGIE IN ELEKTRISCHE ENERGIE SOWIE EIN ENERGIEUMWANDLUNGSSYSTEM UND DESSEN VERWENDUNG**
VEHICLE, TRAILER AND AIRCRAFT COMPRISING AN ENERGY CONVERSION SYSTEM FOR CONVERTING WIND ENERGY INTO ELECTRICAL ENERGY AND AN ENERGY CONVERSION SYSTEM AND ITS USE
VÉHICULE, REMORQUE ET AVION CONTENANT UN SYSTÈME DE CONVERSION D'ÉNERGIE PERMETTANT DE CONVERTIR L'ÉNERGIE ÉOLIENNE EN ÉNERGIE ÉLECTRIQUE, AINSI QUE SYSTÈME DE CONVERSION D'ÉNERGIE ET SON UTILISATION

(43) Veröffentlichungstag der Anmeldung: 01.03.2023
(73) Patentinhaber: Immig, Mario, 55543 Bad Kreuznach (DE)
(72) Erfinder: Immig, Mario, 55543 Bad Kreuznach (DE)
(74) Vertreter: Metten, Karl-Heinz

(56) Entgegenhaltungen:
- WO-A1-2012/003631
- GB-A- 2 182 616
- US-A1- 2005 046 195
- US-A1- 2008 296 904
- US-A1- 2010 244 453
- US-A1- 2011 133 454
- US-A1- 2016 251 964
- US-B2- 9 022 150

## Beschreibung

Die Erfindung betrifft ein Fahrzeug, insbesondere Pkw oder Lastkraftwagen, mit mindestens einem Energieumwandlungssystem zum Umwandeln von Windenergie erzeugt durch Fahrtwind des Fahrzeugs in elektrische Energie. Ferner betrifft die Erfindung auch einen Anhänger mit mindestens einem Energieumwandlungssystem zum Umwandeln von Windenergie in elektrische Energie, insbesondere Windenergie erzeugt durch Fahrtwind des Fahrzeugs. Des Weiteren betrifft die Erfindung ein Flugzeug mit mindestens einem Energieumwandlungssystem zum Umwandeln von Windenergie erzeugt durch den Flugwind des Flugzeugs, in elektrische Energie. Die Erfindung betrifft weiterhin ein Fahrtwindumlenkungssystem für Fahrzeuge. Schließlich betrifft die Erfindung einen Bausatz für ein Fahrtwindumlenkungssystem umfassend ein Grundgerüst und mindestens eine flächige Barriereeinrichtung, wie ein Segel.

Fahrzeuge wie beispielsweise Autos, Lastkraftwagen, Züge aber auch Flugzeuge nutzen in der Regel noch immer Antriebe, die auf Verbrennungsmotoren basieren. Neben fossilen Energieträgern kommen dabei auch vermehrt solche aus erneuerbaren Quellen zum Einsatz. Allerdings wird auch für die Nutzung elektrischer Energie für die Fortbewegung letztendlich regelmäßig noch auf fossile Energieträger zurückgegriffen. Ferner sind im Wesentlichen alle zurzeit genutzten Antriebssysteme darauf angewiesen, das Fahrzeug anzuhalten, um Treibstoff wie Benzin, Gas, Kerosin aber auch elektrischen Strom aufzunehmen. Die US 2020/0189397 A1 beschreibt ein Energierückgewinnungssystem für ein windbetriebenes Elektrofahrzeug, umfassend (a) einen beweglichen, mit Luftschlitzen versehenen vorderen Kanal mit einer Vielzahl von Lamellen, die funktionstüchtig in eine Frontschürze eines Elektrofahrzeugs integriert sind, (b) mindestens eine Windschutzscheibenentlüftung, die betriebsfähig positioniert ist, um Luft an einer Basiskante einer Frontscheibe des Elektrofahrzeugs zu entlüften, (c) eine erste Windkammer, die betriebsfähig mit dem Frontkanal und der mindestens einen Windschutzscheibenöffnung verbunden ist, so dass Luft in den Frontkanal und aus der mindestens einen Windschutzscheibenöffnung strömt, (d) einen Luftgeschwindigkeitssensor an der Frontschürze des Elektrofahrzeugs, eingerichtet und ausgelegt, um die Vielzahl von Lamellen des Frontkanals in eine offene Position zu steuern, wenn der Luftgeschwindigkeitssensor einen Nettogegenwind gegen die Frontschürze des Elektrofahrzeugs erfasst, und in eine geschlossene Position zu bewegen, wenn der Luftgeschwindigkeitssensor keinen Nettogegenwind gegen die Frontschürze des Elektrofahrzeugs erkennt, und (e) mindestens ein vorderes Doppelturbinensystem mit (i) einem Hauptkörper, (ii) einem ersten Rohr und einem zweiten Rohr, wobei das erste Rohr und das zweite Rohr innerhalb des Hauptkörpers angeordnet sind und wobei jedes Rohr an einem vorderen Ende und einem hinteren Ende offen ist, (iii) einer ersten Turbine und einer zweiten Turbine, wobei die erste Turbine in dem ersten Rohr untergebracht ist und wobei die zweite Turbine in dem zweiten Rohr untergebracht ist, (iv) mindestens einem Getriebe, das betriebsmäßig mit der ersten Turbine und der zweiten Turbine verbunden ist, (v) einem betriebsmäßig mit dem Getriebe verbundenen Generator; und (vi) einem Kondensator, der betriebsfähig mit dem Generator verbunden ist, um eine Batterie aufzuladen, die das Elektrofahrzeug antreibt. Hierbei hat das mindestens eine Doppelturbinensystem betriebsfähig innerhalb der ersten Windkammer positioniert zu sein, so dass die durch die Windkammer strömende Luft bewirkt, dass sich mindestens ein Rotor der ersten Turbine und mindestens ein Rotor der zweiten Turbine drehen. Solche Systeme sind jedoch aus vielerlei Hinsicht nachteilig. So wird durch den ausschließlich im Inneren des Fahrzeugs verlaufenden Luftkanal Luft egal welche Temperatur durch das Auto geführt. Dies führt dazu, dass das Auto schneller aufwärmt bzw. abkühlt, aber auch dazu, dass unter Umständen große Mengen Kondensationswasser im Auto gebildet werden. Ferner stellt ein solches System einen gro-ßen Eingriff in die Konstruktionsweise des Fahrzeuges dar.

Die US 2005/0046195 A1 stellt ab auf Kraftfahrzeuge mit einer zusätzlichen Energiegewinnungseinheit, die drehbare Flügel umfasst, die durch die Windgeschwindigkeit des Kraftfahrzeugs bewegt werden, um Energie für die Versorgung elektrischer Funktionen durch einen Generator für stromverbrauchende Geräte innerhalb des Kraftfahrzeugs zu erzeugen.

Auf diese Weise soll ein verbesserter Zugang zu energieeffizienten Fahrzeugen verfügbar gemacht werden.

In der US 2010/244453 A1 wird eine in vertikaler Ausrichtung arbeitende Windturbine als alternative Energiequelle offenbart, die stationär oder auf einem Fahrzeug einsetzbar sein soll. Auf diese Weise soll eine ästhetisch ansprechende Windturbine verfügbar gemacht werden, die so drehbar ist, dass sie immer dem direktesten Windvektor zugewandt ist.

Aus der US 2008/0296904 A1 geht ein Energierückgewinnungssystem hervor, das zur nachträglichen Installation an einem bestehenden beweglichen Objekt konfiguriert ist und das eine Vielzahl von Energieerzeugungsmodulen sowie Mittel zum lösbaren Anbringen der Vielzahl von Energieerzeugungsmodulen an mindestens zwei Seiten des Objekts umfasst. Dabei hat jedes der Energieerzeugungsmodule Mittel zum Aufnehmen eines Fluids und Mittel zum Umwandeln von kinetischer Energie aus der relativen Bewegung zwischen dem Fluid und dem Objekt in chemische potentielle Energie aufzuweisen.

Die GB 2 182 616 A betrifft ein elektrisch angetriebenes Kraftfahrzeug, das mit einer Vorrichtung zur Energiegewinnung ausgestattet ist, die über einen Venturi-Kanal im Dach des Fahrzeugs verfügt. Hierbei hat der Lufteinlass nach vorne und der Auslass nach hinten in Bezug auf die Richtung des Luftstroms bei Vorwärtsbewegung der Fahrzeugkarosserie zu liegen.

Die US 2011/0133454 A1 beschreibt eine tragbare Stromerzeugungsvorrichtung, umfassend ein Gehäuse und eine erste Vorrichtung, welche Rotorblätter zum Erzeugen elektrischer Energie enthält, wenn sie einem Luftstrom ausgesetzt ist, wobei die erste Vorrichtung ausgehend von einer ersten Position gelenkig bewegbar ist in eine zweite ausgefahrene Position, sowie eine zweite Vorrichtung zum Erzeugen elektrischer Energie, wenn sie einer Strahlungslichtquelle ausgesetzt wird, wobei die zweite Vorrichtung auf einer Oberfläche des Gehäuses angeordnet ist. Die Rotorblätter der ersten Vorrichtung sind in der ersten Position innerhalb des Gehäuses und in der zweiten Position außerhalb des Gehäuses angeordnet. Mit dieser tragbaren Stromerzeugungsvorrichtung soll das Wiederaufladen von wiederaufladbaren elektrischen Systemen verbessert werden.

Die Dokumente US 9 022 150 B2, WO 2012/003631 A1 und US 2016/251964 A1 enthalten weitere relevante Informationen zum Stand der Technik.

Daher lag der vorliegenden Erfindung die Aufgabe zugrunde, ein solches System zur Verfügung zu stellen, das die Reichweite und/oder die Betriebsdauer eines Fahrzeugs erhöht, insbesondere ohne Treibstoff oder elektrische Energie an stationären Ladestationen aufnehmen zu müssen.

Demgemäß wurde gemäß einem ersten Aspekt der Erfindung ein Fahrzeug, insbesondere Pkw oder Lastkraftwagen, gefunden mit einem vorderen und einem hinteren Ende und einer sich zwischen vorderem und hinterem Ende erstreckenden Längsachse, mit mindestens einem, insbesondere außerhalb der Karosserie des Fahrzeugs vorliegenden, Energieumwandlungssystem zum Umwandeln von Windenergie erzeugt durch Fahrtwind des Fahrzeugs in elektrische Energie, umfassend mindestens einen Rotor mit einer Rotordrehachse, umfassend mehrere sich radial zur Rotordrehachse erstreckende Rotorblätter, wobei der Rotor eine Anströmrichtung aufweist, die zur Rotordrehachse korrespondiert, insbesondere parallel zur Rotordrehachse ist, und ein Strömungsgehäuse mit einem Rotormantel, der den Rotor, insbesondere vollumfänglich, umgibt, wobei die Rotordrehachse im Wesentlichen parallel zur Längsachse ausgerichtet ist oder einen spitzen Winkel mit der Längsachse bildet, wobei der Schnittpunkt von Längsachse und Rotordrehachse und das Energieumwandlungssystem näher beabstandet zum hinteren als zum vorderen Ende des Fahrzeugs vorliegen, wobei ein erster Windtrichter im Vorlauf des Rotormantels angeordnet ist und sich in Richtung des Rotormantels verjüngt und wobei ein zweiter Windtrichter im Nachlauf des Rotormantels angeordnet ist und sich in Richtung von dem Rotormantel fort aufweitet, wobei der erste Windtrichter dazu ausgelegt und eingerichtet ist, Fahrtwind aufzunehmen, und der zweite Windtrichter dazu ausgelegt und eingerichtet ist, den Ausgangsluftstrom in Richtung des, der Fahrtrichtung entgegensetzten, Fahrzeugendes zu leiten, wobei der zweite Windtrichter quer zur Fahrzeuglängsachse schwenkbeweglich um das Ende des Rotormantels angeordnet, sodass sich der Anströmwinkel des Ausgangsluftstroms zum Leitwerk eines Fahrzeuges ändert. Bei dem aus Längsachse und Rotordrehachse (bzw. deren Verlängerung) gebildeten spitzen Winkel bildet im Sinne der vorliegenden Erfindung(en) die Längsachse den unterhalb der Rotordrehachse (bzw. deren Verlängerung) liegenden Schenkel. Dank des erfindungsgemäßen Fahrzeugs kann während der gesamten Fahrt aus dem Fahrtwind generierte Energie mit genutzt werden, d. h. dem Fahrzeug zur Umwandlung in Bewegungsenergie zur Verfügung gestellt werden. Durch die Erzeugung von Energie während der Fahrt können die Energiespeicher kleiner ausfallen als bei Fahrzeugen, die nur im Stillstand geladen werden können. Dies führt zu erheblichen Gewichtsreduktionen an dem Fahrzeug und somit zu einem geringeren Energiebedarf. Ferner führt die Verkleinerung der Energiespeichersysteme dazu, dass erhebliche Ressourcen beim Fahrzeugbau eingespart werden, insbesondere auch in Form von Metallen. Schließlich führt die Anordnung des Energieumwandlungssystems im hinteren Teil des Fahrzeugs dazu, dass kein zusätzlicher Druckverlust entsteht, der zu einem erhöhten Verbrauch des Fahrzeuges führen würde.

In einer weiteren Ausführungsform des erfindungsgemäßen Fahrzeugs umfasst das Strömungsgehäuse zwei Windtrichter, die dazu ausgelegt und eingerichtet sind, einen Fahrtwind, insbesondere Fahrtwindluftstrom, zum Rotor zu führen. Mithilfe der Windtrichter kann der Fahrtwind gezielt auf den Rotor geleitet werden, wodurch dessen Ertrag gesteigert werden kann. Die Windtrichter dehnen sich dabei zweckmäßigerweise kanalförmig, insbesondere kreisförmig, vorzugsweise elliptisch oder eckig, insbesondere polygonal, vorzugsweise viereckig, vom Rotormantel aus.

Durch die Nutzung von sich verjüngenden bzw. aufweitenden Trichtern werden die Windgeschwindigkeiten, die auf den Rotor wirken, deutlich erhöht, insbesondere um wenigstens 20 %, vorzugsweise um wenigstens 40 %, besonders bevorzugt um wenigstens 60 %. Durch die Erhöhung der Windgeschwindigkeit kann der Ertrag des Energieumwandlungssystems erhöht werden, womit regelmäßig eine gesteigerte Reichweite des erfindungsgemäßen Fahrzeugs einhergeht.

In einer weiteren, bevorzugten Ausführungsform des erfindungsgemäßen Fahrzeugs ist der Rotor in dem Rotormantel in einem Axialabstand zu einem oder mehreren Windtrichtern angeordnet. Zwischen dem inneren Ende eines jeweiligen Windfangtrichters, insbesondere dort, wo der Windfangtrichter auf den Rotormantel stößt, und dem eigentlichen Rotor erstreckt sich der Axialabstand. Durch das Vorsehen eines Axialabstands kann gewährleistet werden, dass der Wind auf den Rotor in dessen Drehrichtung trifft.

In einer besonders bevorzugten Ausgestaltungsform des erfindungsgemäßen Fahrzeuges ist der zweite Windtrichter quer zur Fahrzeuglängsachse mechanisch, elektrisch, pneumatisch und/oder hydraulisch schwenkbeweglich, um das Ende des Rotormantels angeordnet, sodass sich der Anströmwinkel des Ausgangsluftstroms zum Leitwerk, insbesondere Spoiler, eines Fahrzeuges ändert, insbesondere um bis zu etwa 45° zu beiden Seiten der Fahrzeuglängsachse ändert. Mit der Schwenkbeweglichkeit des zweiten Windtrichters kann überraschenderweise erreicht werden, dass der Anpressdruck des Fahrzeuges durch gezieltes Aufleiten des Ausgangsluftstroms auf das Leitwerk des Fahrzeugs erhöht wird. Dies kann beispielsweise bei schnellen Kurvenfahrten dazu genutzt werden, um die Fahrsicherheit des Fahrzeugs zu verbessern.

In einer weiteren besonders bevorzugten Ausgestaltungsform des erfindungsgemäßen Fahrzeuges ist das Energieumwandlungssystem auf dem Heck angebracht. Die Verortung des Energieumwandlungssystems auf dem Heck eines Fahrzeuges hat den besonderen Vorteil, dass zum einen kein unerwünschter, den Energiebedarf des Fahrzeugs erhöhender, Druckverlust hervorgerufen wird. Zum anderen ist auf diese Weise auch kein aufwendiger Eingriff in die Fahrzeugstruktur zur Installation des Energieumwandlungssystems erforderlich.

In einer zweckmäßigen Ausgestaltungsform des erfindungsgemäßen Fahrzeuges ist das Energieumwandlungssystem über eine Halterung, umfassend mindestens eine Strebe und/oder über die Anhängerkupplung, auf dem Dach, einem Dachträger, einem Dachkorb oder einer Dachbox des Fahrzeugs angebracht. Die Halterung ermöglicht es, das Energieumwandlungssystem auch bei bestehenden Fahrzeugen auf einfache und zuverlässige Weise nachträglich sicher zu montieren.

In einer alternativen Ausführungsform kann das erfindungsgemäße Fahrzeug ferner ein zweites Energieumwandlungssystem, wie oben beschrieben, im Inneren des Fahrzeuges umfassen. Durch die Nutzung eines zweiten Energieumwandlungssystems kann die Energiegewinnung des Fahrzeugs nochmals erhöht werden. Allerdings reicht es regelmäßig bereits aus, nur ein Energieumwandlungssystem am Äußeren des Fahrzeuges anzubringen, um ausreichend Energie für die Fortbewegung des Fahrzeugs bereitzustellen.

Die der Erfindung zugrunde liegende Aufgabe wird in einem zweiten Aspekt der Erfindung durch einen Anhänger, insbesondere Auto- oder Lastkraftwagenanhänger oder Zugwaggon am Ende einer Abfolge von Zugwaggons, gelöst, mit einem vorderen und einem hinteren Ende und einer sich zwischen vorderem und hinterem Ende erstreckenden Längsachse, umfassend mindestens ein Energieumwandlungssystem zum Umwandeln von Windenergie in elektrische Energie, insbesondere Windenergie erzeugt durch Fahrtwind eines Fahrzeugs, mit mindestens einem Rotor mit einer Rotordrehachse, umfassend mehrere sich radial zur Rotordrehachse erstreckende Rotorblätter, wobei die Rotordrehachse im Wesentlichen parallel zur Längsachse ausgerichtet ist oder einen spitzen Winkel mit der Längsachse bildet, wobei der Schnittpunkt von Längsachse und Rotordrehachse näher beabstandet zum hinteren als zum vorderen Ende des Anhängers vorliegt und wobei ein Strömungsgehäuse mit einem Rotormantel den Rotor, insbesondere vollumfänglich, umgibt, wobei das Strömungsgehäuse ferner mindestens einen Windtrichter, vorzugsweise zwei Windtrichter, der bzw. die dazu ausgelegt und eingerichtet ist/sind, einen Fahrtwind, insbesondere Fahrtwindluftstrom, zum Rotor zu führen, wobei ein erster Windtrichter im Vorlauf des Rotormantels angeordnet ist und sich in Richtung des Rotormantels verjüngt und wobei ein zweiter Windtrichter im Nachlauf des Rotormantels angeordnet ist und sich in Richtung von dem Rotormantel fort aufweitet, wobei der erste Windtrichter dazu ausgelegt und eingerichtet ist Fahrtwind aufzunehmen und der zweite Windtrichter dazu ausgelegt und eingerichtet ist den Ausgangsluftstrom in Richtung des, der Fahrtrichtung entgegensetzten, Fahrzeugendes zu leiten. Durch Nutzung eines Energieumwandlungssystems, wie oben beschrieben, mit einem Anhänger, kann das Energieumwandlungssystem auch ohne umfangreichen Umbau am Fahrzeug selber durch beispielsweise Lastkraftwagen oder Züge genutzt werden. Auf diese Weise kann, insbesondere wie vorangehend beschrieben, die Zugmaschine mit Energie versorgt und/oder eine mitgeführte Batterie aufgeladen werden.

Durch die Nutzung von sich verjüngenden bzw. aufweitenden Trichtern können die Windgeschwindigkeiten, die auf den Rotor wirken erhöht werden, insbesondere um wenigstens 20 %, vorzugsweise um wenigstens 40 %, besonders bevorzugt um wenigstens 60 %. Durch die Erhöhung der Windgeschwindigkeit kann der Ertrag des Energieumwandlungssystems erhöht werden. Solche Ausführungsformen des erfindungsgemäßen Anhängers sind hierbei besonders bevorzugt, bei denen sich der Windtrichter kanalförmig, insbesondere kreisförmig, vorzugsweise elliptisch oder eckig, insbesondere polygonal, vorzugsweise viereckig, vom Rotormantel ausdehnt.

In einer weiteren Ausführungsform des erfindungsgemäßen Anhängers ist der Rotor in dem Rotormantel in einem Axialabstand zu den mehreren Windtrichtern angeordnet. Zwischen dem inneren Ende eines jeweiligen Windfangtrichters, insbesondere dort, wo der Windfangtrichter auf den Rotormantel stößt, und dem eigentlichen Rotor erstreckt sich der Axialabstand. Durch das Vorsehen eines Axialabstands kann gewährleistet werden, dass der Wind auf den Rotor in dessen Drehrichtung trifft.

In einer zweckmäßigen Ausführungsform des erfindungsgemäßen Anhängers verfügt der Anhänger ferner über eine Anhängerhülle, umfassend mindestens eine Öffnung, die zur Aufnahme des Fahrtwinds ausgelegt und eingerichtet ist und dass die Anhängerhülle ferner über mindestens einen Auslass verfügt, der zur Abgabe des Ausgangsluftstroms an die Umgebung des Anhängers ausgelegt und eingerichtet ist.

In einer weiteren Ausgestaltungsform des erfindungsgemäßen Anhängers ist der mindestens eine Rotor quer zur Rotordrehachse schwenkbeweglich, vorzugsweise um eine insbesondere vertikale Schwenkachse und/oder eine insbesondere horizontale Kippachse, insbesondere zwischen mindestens zwei Rotororientierungen, insbesondere relativ zur Anhängerhülle angeordnet. Die Schwenkbeweglichkeit des Rotors führt dazu, dass der Rotor jederzeit optimal zum auftreffenden Wind ausgerichtet werden kann, sodass dessen Ertrag erhöht wird.

Anhänger im Sinne des erfindungsgemäßen Anhängers stellen vorzugsweise Auto- oder Lastkraftwagenanhänger oder einen Zugwaggon am Ende einer Abfolge von Zugwaggons dar.

Gemäß einem dritten Aspekt der Erfindung wird die der Erfindung zugrunde liegende Aufgabe durch ein Flugzeug gelöst, umfassend ein Energieumwandlungssystem zum Umwandeln von Windenergie erzeugt durch Fahrtwind des Flugzeugs in elektrische Energie, umfassend mindestens einen Rotor mit einer Rotordrehachse, umfassend mehrere sich radial zur Rotordrehachse erstreckende Rotorblätter, wobei der Rotor eine Anströmrichtung aufweist, die zur Rotordrehachse korrespondiert, insbesondere parallel zur Rotordrehachse ist, und ein Strömungsgehäuse mit einem Rotormantel, der den Rotor, insbesondere vollumfänglich, umgibt, wobei die Rotordrehachse im Wesentlichen parallel zur Längsachse des Flugzeugs ausgerichtet ist, wobei das Strömungsgehäuse ferner mindestens einen Windtrichter, der dazu ausgelegt und eingerichtet ist, einen Fahrtwind, insbesondere Fahrtwindluftstrom, zum Rotor zu führen, umfasst, wobei ein erster Windtrichter im Vorlauf des Rotormantels angeordnet ist und sich in Richtung des Rotormantels verjüngt, wobei der erste Windtrichter dazu ausgelegt und eingerichtet ist, Fahrtwind aufzunehmen, und wobei ein zweiter Windtrichter vorgesehen ist, der dazu ausgelegt und eingerichtet ist, den Ausgangsluftstrom in Richtung des, der Fahrtrichtung entgegensetzten, Flugzeugs zu leiten. Insbesondere in Flugzeugen, die sich mit erheblicher Geschwindigkeit bewegen, kann das Energieumwandlungssystem dazu beitragen, erhebliche Mengen an elektrischer Energie für den Antrieb des Flugzeugs bereitzustellen. Zusätzlich oder alternativ kann das Energieumwandlungssystem beim Landeanflug bzw. Bremsvorgang mit eingeschaltet werden, wobei elektrische Energie generiert wird, die in mitgeführten Akkus gespeichert werden kann.

. Durch die Nutzung von sich verjüngenden bzw. aufweitenden Trichtern können die Windgeschwindigkeiten, die auf den Rotor wirken erhöht werden, insbesondere um wenigstens 20 %, vorzugsweise um wenigstens 40 %, besonders bevorzugt um wenigstens 60 %. Durch die Erhöhung der Windgeschwindigkeit kann der Ertrag des Energieumwandlungssystems erhöht werden. Solche Ausgestaltungsformen des Flugzeugs sind bevorzugt, bei denen sich der Windtrichter kanalförmig, insbesondere kreisförmig, vorzugsweise elliptisch oder eckig, insbesondere polygonal, vorzugsweise viereckig, vom Rotormantel ausdehnt.

In einer zweckmäßigen Ausgestaltungsform des erfindungsgemäßen Flugzeugs ist vorgesehen, dass der Rotor in dem Rotormantel in einem Axialabstand zu dem ersten und/oder zweiten Windtrichter angeordnet ist. Zwischen dem inneren Ende eines jeweiligen Windfangtrichters, insbesondere dort, wo der Windfangtrichter auf den Rotormantel stößt, und dem eigentlichen Rotor erstreckt sich der Axialabstand. Durch das Vorsehen eines Axialabstands kann gewährleistet werden, dass der Wind auf den Rotor in dessen Drehrichtung trifft.

Die der Erfindung zugrunde liegende Aufgabe wird ferner gelöst durch die Verwendung eines Energieumwandlungssystems, wie vorangehend anhand allgemeiner und bevorzugter Ausführungsformen beschrieben, zur Verbesserung der Fahreigenschaften von Fahrzeugen, insbesondere Pkws, insbesondere durch Erhöhung des Anpressdruckes, insbesondere auf kurvigen Abschnitten der Straße. Bisher sind aus dem Stand der Technik keinerlei Energieumwandlungssysteme bekannt, die nicht nur zur Erzeugung von elektrischem Strom genutzt werden, sondern die darüber hinaus die Fahrsicherheit eines Fahrzeuges durch Einflussnahme auf die Fahrzeugaerodynamik erhöhen. Mit dem erfindungsgemäßen Energieumwandlungssystem gelingt dies insbesondere durch das an die jeweilige Fahrsituation angepasste Aufleiten des Ausgangsluftstroms auf ein am Heck des Fahrzeuges angebrachtes Leitwerk.

Gemäß einem vierten Aspekt der Erfindung wird das der Erfindung zugrunde liegende Problem ferner gelöst durch ein Fahrtwindumlenkungssystem für Fahrzeuge, insbesondere PKW oder LKW, umfassend ein Energieumwandlungssystem zum Umwandeln von Windenergie in elektrische Energie, insbesondere Windenergie erzeugt durch Fahrtwind des Fahrzeugs, umfassend mindestens einen Rotor mit einer Rotordrehachse, umfassend mehrere sich radial zur Rotordrehachse erstreckende Rotorblätter, wobei der Rotor eine Anströmrichtung aufweist, die zur Rotordrehachse korrespondiert, insbesondere parallel zur Rotordrehachse ist, und einen Strömungskanal mit einem Rotormantel, der den Rotor, insbesondere vollumfänglich, umgibt, wobei die Rotordrehachse und der Rotormantel im Wesentlichen vertikal an der Rückseite eines Fahrzeugs anordenbar sind, wobei der Strömungskanal mindestens einen oberhalb des Dachs eines Fahrzeugs, stromaufwärts in Bezug auf den Rotor anordenbaren ersten Windtrichter umfasst, ausgelegt und eingerichtet, um Fahrtwind über einen ersten Krümmer und den Rotormantel zum Rotor zu führen, ferner umfassend einen stromabwärts in Bezug auf den Rotor vorliegenden oder anordenbaren zweiten Windtrichter, eingerichtet und ausgelegt, um Fahrwind vom Rotor weg zu führen und einen zweiten Krümmer im Übergang vom Rotormantel zum zweiten Windtrichter, eingerichtet und ausgelegt, um dem Rotor entstammenden Fahrtwind weg vom Fahrzeug zu befördern. Durch die Nutzung eines Krümmers kann das Fahrtwindumlenkungssystem in einer Weise an dem Fahrzeug angeordnet sein, dass der Winkel zwischen der Fahrzeuglängsachse und der Rotordrehachse im Wesentlichen 90° beträgt, gegebenenfalls sogar größer als 90° ist.

Dies ermöglicht es, das Fahrtwindumlenkungssystem am Kofferraum bzw. an der Rückseite eines Fahrzeugs anzubringen, sodass sich nur die Öffnung des mindestens einen Windtrichters, der dazu ausgelegt und eingerichtet ist, den Fahrtwind aufzunehmen, im Fahrtwind befindet. Der verbleibende Teil des Energieumwandlungssystems liegt dann beispielsweise rückseitig an dem Fahrzeug vor. Dies hat den Vorteil, dass sich das erfindungsgemäße Fahrtwindumlenkungssystem einfach in bestehende Fahrzeuge integrieren lässt und dort als zusätzliche Energiequelle dienen kann, um beispielsweise die Bordbatterie aufzuladen. Dies hat weiterhin den Vorteil, dass die Reichweiten herkömmlicher Elektro-Fahrzeuge erhöht werden können.

Das erfindungsgemäße Fahrtwindumlenkungssystem für Fahrzeuge umfasst ferner einen zweiten Krümmer im Übergang vom Rotormantel zum zweiten Windtrichter, eingerichtet und ausgelegt, um dem Rotor entstammenden Fahrtwind weg vom Fahrzeug zu befördern.

Solche Ausgestaltungsformen des erfindungsgemäßen Fahrtwindumlenkungssystems für Fahrzeuge sind bevorzugt, bei denen sich die Windtrichter kanalförmig, insbesondere kreisförmig, vorzugsweise elliptisch oder eckig, insbesondere polygonal, vorzugsweise viereckig, vom Rotormantel ausdehnen.

In zweckmäßigen Ausführungsformen des erfindungsgemäßen Fahrtwindumlenkungssystems ist mindestens ein Rotor in dem Rotormantel in einem Axialabstand zu dem ersten und/oder zweiten Windtrichter angeordnet. Zwischen dem inneren Ende eines jeweiligen Windfangtrichters, insbesondere dort wo der Windfangtrichter auf den Rotormantel stößt, und dem eigentlichen Rotor erstreckt sich der Axialabstand. Durch das Vorsehen eines Axialabstands kann gewährleistet werden, dass der Wind auf den Rotor in dessen Drehrichtung trifft.

In einer besonders zweckmäßigen Ausführungsform des erfindungsgemäßen Fahrtwindumlenkungssystems ist vorgesehen, dass das Fahrtwindumlenkungssystem über mindestens eine Strebe und/oder über eine Kupplungseinheit, insbesondere Anhängerkupplung, und/oder über eine Vergurtung oder Verzurrung auf oder an der Rückseite und/oder dem Dach eines Fahrzeugs anbringbar ist. Somit ist es möglich, das Fahrtwindumlenkungssystem besonders einfach bei bestehenden Fahrzeugen nachzurüsten.

In einer weiteren besonders zweckmäßigen Ausführungsform des erfindungsgemäßen Fahrtwindumlenkungssystems ist das Energieumwandlungssystem über die Kupplungseinheit, insbesondere in Form der Anhängerkupplung, schwenkbar und/oder klappbar an dem Fahrzeug befestigbar. Eine solche Befestigung erlaubt es, dass auch nach erfolgter Montage des Fahrtwindumlenkungssystems an der Rückseite eines Fahrzeugs, insbesondere im Bereich der Kofferraumöffnung, das Fahrzeug weiterhin geöffnet werden kann, zum Beispiel um den Kofferraum zu beladen.

Die Erfindung betrifft insbesondere auch ein Kit-of-Parts für ein erfindungsgemäßes Fahrtwindumlenkungssystem, wie zuvor beschrieben, umfassend ein Grundgerüst, insbesondere in Form einer Fachwerkstruktur, für das Strömungsgehäuse des Energieumwandlungssystems, umfassend den Rotormantel und den ersten und zweiten Windtrichter und den ersten und zweiten Krümmer, und mindestens eine flächige Barriereeinrichtung, wie ein Segel, ausgelegt und eingerichtet, um das Grundgerüst mindestens abschnittsweise zu umspannen, so dass Fahrtwind auf den mindestens einen Rotor leitbar ist. Durch den erfindungsgemäßen Bausatz gelingt es selbst dem Laien, ein erfindungsgemäßes Fahrtwindumlenkungssystem für ein Fahrzeug einsatzbereit zu machen.

Mit der vorliegenden Erfindung geht die überraschende Erkenntnis einher, dass sich mit der heckseitigen Anbringung eines geeigneten Energieumwandlungssystems an einem Fahrzeug, auf sehr effiziente Weise aus dem Fahrtwind des Fahrzeugs mithilfe eines Rotors gemäß dem Widerstandsprinzip Energie gewinnen lässt, insbesondere so viel Energie, dass ein stationäres Aufladen des Fahrzeugs mit elektrischer Energie signifikant hinausgezögert werden kann. Von besonderem Vorteil ist auch, dass sich mit den erfindungsgemäßen Fahrzeugen, die heckseitig mit dem Energieumwandlungssystem ausgestattet sind, die Fahrsicherheit erhöhen lässt. Als besonders überraschend hat sich ebenfalls herausgestellt, dass bei Nutzung der erfindungsgemäßen Anhänger elektrische Energie aus Fahrtwind in erheblicher Menge zuverlässig generiert werden kann. Schließlich hat sich als besonders vorteilhaft erwiesen, dass auch bestehende Fahrzeuge nachträglich mit dem geschilderten Energieumwandlungssystem in erfindungsgemäßer Weise ausgestattet werden können.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken. Dabei zeigen
- Figur 1: Seitenansicht eines erfindungsgemäßen Fahrzeuges, insbesondere PKWs, umfassend ein Energieumwandlungssystem,
- Figur 2: Draufsicht eines erfindungsgemäßen Fahrzeuges, insbesondere PKWs, umfassend ein Energieumwandlungssystem,
- Figur 3: Draufsicht einer alternativen Ausführungsform des Energieumwandlungssystems nach dem ersten Aspekt der Erfindung,
- Figur 3a: Draufsicht einer alternativen Ausführungsform des Energieumwandlungssystems nach dem ersten Aspekt der Erfindung mit geänderter Anströmrichtung des Leitwerks,
- Figur 3b: Draufsicht einer alternativen Ausführungsform des Energieumwandlungssystems nach dem ersten Aspekt der Erfindung mit geänderter Anströmrichtung des Leitwerks,
- Figur 4: Seitenansicht einer alternativen Ausführungsform eines erfindungsgemäßen Fahrzeuges zur Anbringung auf dem Dach eines Fahrzeuges,
- Figur 5: Seitenansicht eines erfindungsgemäßen Fahrtwindumlenkungssystems zur Anbringung auf der Rückseite eines PKW,
- Figur 5a: Seitenansicht einer alternativen Ausführungsform eines erfindungsgemäßen Fahrtwindumlenkungssystems zur Anbringung auf der Rückseite eines PKW,
- Figur 5b: Seitenansicht einer weiteren alternativen Ausführungsform eines erfindungsgemäßen Fahrtwindumlenkungssystems zur Anbringung auf der Rückseite eines PKW und
- Figur 5c: Seitenansicht einer alternativen Ausführungsform eines erfindungsgemäßen Fahrtwindumlenkungssystems zur Anbringung auf der Rückseite eines PKW.

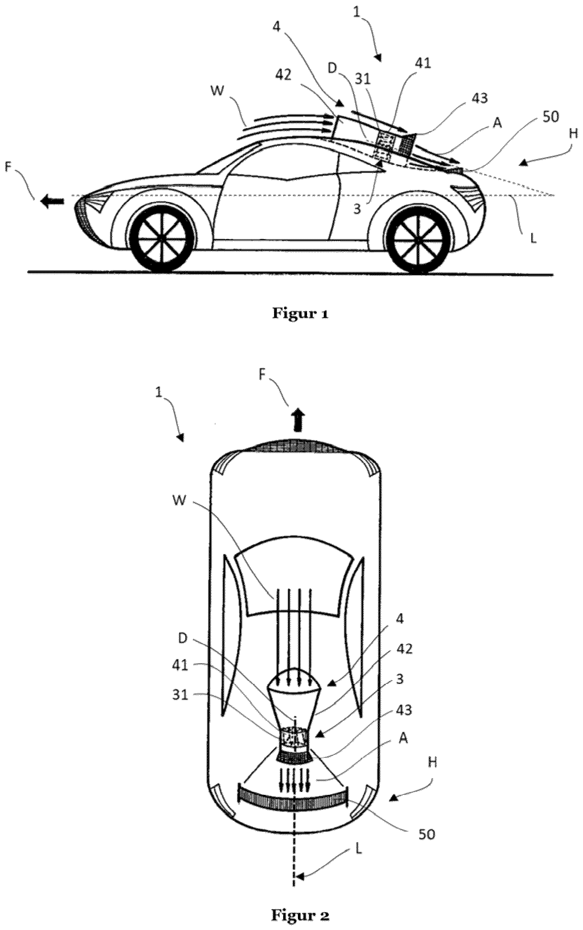

Figur 1 zeigt einen Pkw mit einem vorderen und einem hinteren Ende und einer sich zwischen vorderem und hinterem Ende erstreckenden Längsachse (L), mit einem außerhalb der Karosserie des Fahrzeugs vorliegenden Energieumwandlungssystem (1) zum Umwandeln von Windenergie in elektrische Energie, insbesondere Windenergie erzeugt durch Fahrtwind des Fahrzeugs, umfassend einen Rotor (3) mit einer Rotordrehachse (D), umfassend mehrere sich radial zur Rotordrehachse (D) erstreckende Rotorblätter (31), wobei der Rotor (3) eine Anströmrichtung aufweist, die zur Rotordrehachse (D) korrespondiert, insbesondere parallel zur Rotordrehachse (D) ist, und ein Strömungsgehäuse (4) mit einem Rotormantel (41), der den Rotor, insbesondere vollumfänglich, umgibt, wobei die Rotordrehachse (D) (bzw. deren Verlängerung) in der dargestellten Ausführungsform mit der Längsachse (L) (siehe gestrichelte Linien) einen spitzen Winkel bildet, wobei der Schnittpunkt von Längsachse (L) und Rotordrehachse (D) und das Energieumwandlungssystem (1) näher beabstandet zum hinteren als zum vorderen Ende des Fahrzeugs vorliegen. Wie der Figur 1 entnommen werden kann, bildet die Längsachse L den unterhalb der Rotordrehachse (bzw. deren Verlängerung) liegenden Schenkel des spitzen Winkels. Das Strömungsgehäuse (4) umfasst zwei Windtrichter (42, 43), die dazu ausgelegt und eingerichtet sind, einen Fahrtwind (W), insbesondere Fahrtwindluftstrom, zum Rotor (3) zu führen, wobei der erste Windtrichter (42) im Vorlauf des Rotormantels (41) angeordnet ist und sich in Richtung des Rotormantels (41) verjüngt, und wobei ein zweiter Windtrichter (43) im Nachlauf des Rotormantels (41) angeordnet ist und sich in Richtung von dem Rotormantel (41) fort aufweitet, wobei der erste Windtrichter (42) dazu ausgelegt und eingerichtet ist Fahrtwind (W) aufzunehmen und der zweite Windtrichter (43) dazu ausgelegt und eingerichtet ist den Ausgangsluftstrom (A) in Richtung des, der Fahrtrichtung (F) entgegensetzten, Fahrzeugendes, insbesondere auf das Leitwerk (50) zu leiten.

Die Figur 2 zeigt den in Figur 1 beschriebenen PKW in einer Draufsicht.

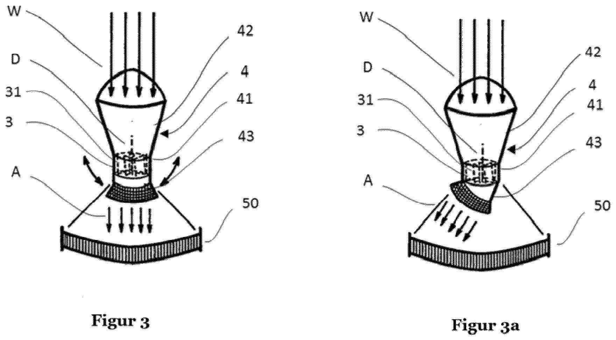

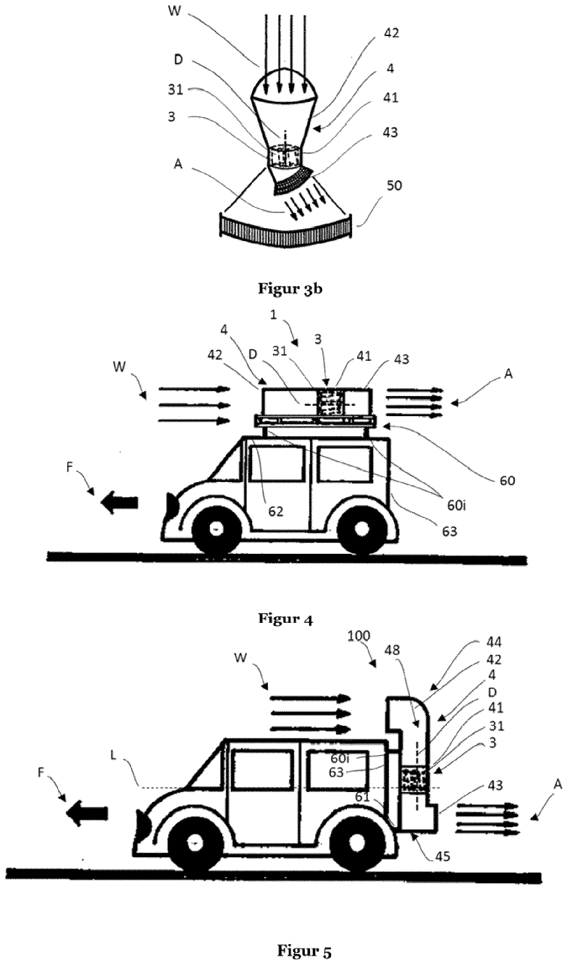

Figur 3, 3a und 3b zeigen Draufsichten eines Energieumwandlungssystems (1), wobei der zweite Windtrichter (43) quer zur Fahrzeuglängsachse (L) schwenkbeweglich, insbesondere mechanisch, elektrisch, pneumatisch und/oder hydraulisch schwenkbeweglich, um das Ende des Rotormantels (41) angeordnet ist, sodass sich der Anströmwinkel des Ausgangsluftstroms (A) zum Leitwerk (50), insbesondere Spoiler, eines Fahrzeuges ändert, insbesondere um bis zu etwa 45° zu beiden Seiten der Fahrzeuglängsachse (L) ändert.

Figur 4 zeigt eine weitere Ausführungsform des erfindungsgemäßen Pkws mit einem Energieumwandlungssystem (1), umfassend einen Rotor (3) mit einer Rotordrehachse (D), umfassend mehrere sich radial zur Rotordrehachse (D) erstreckende Rotorblätter (31), ein Strömungsgehäuse (4) mit einem Rotormantel (41), der den Rotor vollumfänglich umgibt, einen Windtrichter (42) zur Aufleitung des Fahrtwinds (W) auf dem Rotor (3), einen Windtrichter (43) zur Ableitung des Ausgangsluftstroms in Richtung Fahrzeugende und eine Halterung (60), umfassend zwei Streben (60i) über die die Halterung (60), insbesondere ein Dachkorb, auf dem Dach (62) des Fahrzeugs angebracht ist.

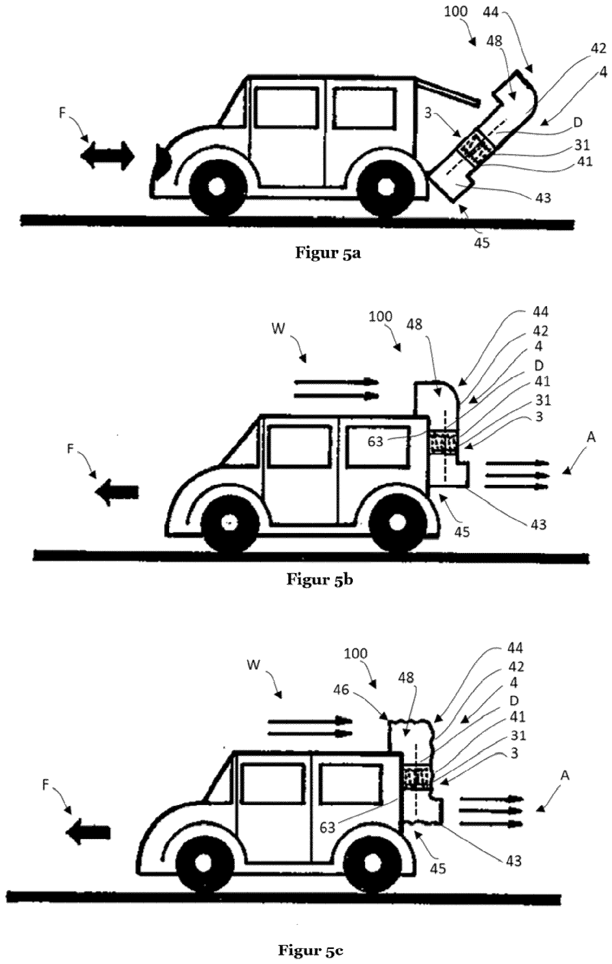

Figur 5 zeigt eine Seitenansicht des erfindungsgemäßen Fahrtwindumlenkungssystems (100) für PKW nach einem vierten Aspekt der Erfindung, umfassend ein Energieumwandlungssystem (1) zum Umwandeln von Windenergie in elektrische Energie, insbesondere Windenergie erzeugt durch Fahrtwind des Fahrzeugs, umfassend einen Rotor (3) mit einer Rotordrehachse (D), umfassend mehrere sich radial zur Rotordrehachse (D) erstreckende Rotorblätter (31), wobei der Rotor (3) eine Anströmrichtung aufweist, die zur Rotordrehachse (D) korrespondiert, insbesondere parallel zur Rotordrehachse (D) ist, und einen Strömungskanal (48) mit einem Rotormantel (41), der den Rotor, insbesondere vollumfänglich, umgibt, wobei die Rotordrehachse (D) und der Rotormantel im Wesentlichen vertikal an der Rückseite eines Fahrzeugs angeordnet sind, wobei der Strömungskanal (48) mindestens einen oberhalb des Dachs eines Fahrzeugs, stromaufwärts in Bezug auf den Rotor angeordneten ersten Windtrichter (42) umfasst, ausgelegt und eingerichtet, um Fahrtwind über einen ersten Krümmer (44) und den Rotormantel zum Rotor (3) zu führen. Der Strömungskanal weist ferner einen zweiten Krümmer (45) im Übergang vom Rotormantel zum zweiten Windtrichter auf, eingerichtet und ausgelegt, um dem Rotor entstammenden Fahrtwind weg vom Fahrzeug zu befördern. Das Fahrtwindumlenksystem aus Figur 5 ist über eine Strebe (60i) und über eine Kupplungseinheit, insbesondere Anhängerkupplung (61), an der Rückseite (63) des Fahrzeugs angebracht.

Figur 5a zeigt eine Seitenansicht einer Ausführungsform des erfindungsgemäßen Fahrtwindumlenkungssystems (100), wie in Figur 5 beschrieben. Diese Ausgestaltungsform unterscheidet sich jedoch dadurch, dass das Fahrtwindumlenkungssystem über Anhängerkupplung (61), klappbar an dem Fahrzeug befestigt ist.

Figur 5b zeigt eine Seitenansicht einer weiteren Ausführungsform des erfindungsgemäßen Fahrtwindumlenkungssystems (100), wie in Figur 5 beschrieben. Diese Ausgestaltungsform unterscheidet sich jedoch dadurch, dass das Energieumwandlungssystem (1) an der Fahrzeugrückseite (63) ohne Streben und Anhängerkupplung montiert ist, insbesondere über eine Vergurtung oder Verzurrung (nicht abgebildet) montiert ist.

Figur 5c zeigt eine Seitenansicht einer alternativen Ausführungsform des erfindungsgemäßen Fahrtwindumlenkungssystems (100) wie in Figur 5b beschrieben, umfassend ein Grundgerüst, insbesondere in Form einer Fachwerkstruktur, für das Strömungsgehäuse (4) des Energieumwandlungssystem (1), umfassend den Rotormantel (41) und gegebenenfalls den ersten und zweiten Windtrichter (42, 43) und den ersten und zweiten Krümmer (44, 45), und eine flächige Barriereeinrichtung in Form eines Segels (46), ausgelegt und eingerichtet, um das Grundgerüst mindestens abschnittsweise zu umspannen, so dass Fahrtwind auf den mindestens einen Rotor (3) leitbar ist.

### Bezugszeichen

- 1: Energieumwandlungssystem
- 3: Rotor
- 31: Rotorblätter
- 4: Strömungsgehäuse
- 41: Rotormantel
- 42: erster Trichter
- 43: zweiter Trichter
- 44: Krümmer
- 45: Krümmer
- 46: Segel
- 48: Strömungskanal
- 50: Leitwerk
- 60: Halterung
- 60i: Strebe
- 61: Anhängerkupplung
- 62: Dach
- 63: Rückseite
- 7: Anhänger
- 71: Anhängerhülle
- 72: Öffnung
- 73: Auslass
- 8: Flugzeug
- 100: Fahrtwindumlenkungssystem
- A: Ausgangsluftstrom
- D: Rotordrehachse
- F: Fahrtrichtung
- H: Heck
- L: Längsachse
- 5: Schwenkachse
- K: Kippachse
- W: Fahrtwind

## Patentansprüche

1. Fahrzeug, insbesondere Pkw oder Lastkraftwagen, mit einem vorderen und einem hinteren Ende und einer sich zwischen vorderem und hinterem Ende erstreckenden Längsachse (L), mit mindestens einem, insbesondere außerhalb der Karosserie des Fahrzeugs vorliegenden, Energieumwandlungssystem (1) zum Umwandeln von Windenergie erzeugt durch Fahrtwind des Fahrzeugs in elektrische Energie, umfassend
mindestens einen Rotor (3) mit einer Rotordrehachse (D), umfassend mehrere sich radial zur Rotordrehachse (D) erstreckende Rotorblätter (31), wobei der Rotor (3) eine Anströmrichtung aufweist, die zur Rotordrehachse (D) korrespondiert, insbesondere parallel zur Rotordrehachse (D) ist, und
ein Strömungsgehäuse (4) mit einem Rotormantel (41), der den Rotor, insbesondere vollumfänglich, umgibt,
wobei die Rotordrehachse (D) im Wesentlichen parallel zur Längsachse (L) ausgerichtet ist oder einen spitzen Winkel mit der Längsachse (L) bildet, wobei der Schnittpunkt von Längsachse (L) und Rotordrehachse (D) näher beabstandet zum hinteren als zum vorderen Ende des Fahrzeugs vorliegt und wobei das Energieumwandlungssystem (1) näher beabstandet zum hinteren als zum vorderen Ende des Fahrzeugs vorliegt, insbesondere auf dem Heck (H) angebracht ist, wobei ein erster Windtrichter (42) im Vorlauf des Rotormantels (41) angeordnet ist und sich in Richtung des Rotormantels (41) verjüngt, und
wobei ein zweiter Windtrichter (43) im Nachlauf des Rotormantels (41) angeordnet ist und sich in Richtung von dem Rotormantel (41) fort aufweitet,
wobei der erste Windtrichter (42) dazu ausgelegt und eingerichtet ist Fahrtwind (W) aufzunehmen und der zweite Windtrichter (43) dazu ausgelegt und eingerichtet ist den Ausgangsluftstrom (A) in Richtung des, der Fahrtrichtung (F) entgegensetzten, Fahrzeugendes zu leiten,
wobei der zweite Windtrichter (43) quer zur Fahrzeuglängsachse (L) schwenkbeweglich um das Ende des Rotormantels (41) angeordnet ist, sodass sich der Anströmwinkel des Ausgangsluftstroms (A) zum Leitwerk (50) eines Fahrzeuges ändert.

2. Fahrzeug nach Anspruch 1, **dadurch gekennzeichnet, dass** der Rotor (3) in dem Rotormantel (41) in einem Axialabstand zu einem oder mehreren Windtrichtern (42, 43) angeordnet ist.

3. Fahrzeug nach einem der Ansprüche 1 oder 2, **dadurch gekennzeichnet, dass** der zweite Windtrichter (43) quer zur Fahrzeuglängsachse (L) mechanisch, elektrisch, pneumatisch und/oder hydraulisch schwenkbeweglich um das Ende des Rotormantels (41) angeordnet ist, sodass sich der Anströmwinkel des Ausgangsluftstroms (A) zum Leitwerk (50), insbesondere Spoiler, eines Fahrzeuges ändert, insbesondere um bis zu etwa 45° zu beiden Seiten der Fahrzeuglängsachse (L) ändert.

4. Fahrzeug nach einem der vorangehenden Ansprüche, **dadurch gekennzeichnet, dass**
das Energieumwandlungssystem (1) über eine Halterung (60), umfassend mindesten eine Strebe (60i), auf dem Dach (62), einem Dachträger, einem Dachkorb oder einer Dachbox des Fahrzeugs angebracht ist.

5. Anhänger (7), insbesondere Auto- oder Lastkraftwagenanhänger oder Zugwaggon am Ende einer Abfolge von Zugwaggons, mit einem vorderen und einem hinteren Ende und einer sich zwischen vorderem und hinterem Ende erstreckenden Längsachse (L), umfassend mindestens ein Energieumwandlungssystem (1) zum Umwandeln von Windenergie in elektrische Energie, insbesondere Windenergie erzeugt durch Fahrtwind eines Fahrzeugs, mit mindestens einem Rotor (3) mit einer Rotordrehachse (D), umfassend mehrere sich radial zur Rotordrehachse (D) erstreckende Rotorblätter (31),
wobei die Rotordrehachse (D) im Wesentlichen parallel zur Längsachse (L) ausgerichtet ist oder einen spitzen Winkel mit der Längsachse (L) bildet, wobei der Schnittpunkt von Längsachse (L) und Rotordrehachse (D) näher beabstandet zum hinteren als zum vorderen Ende des Anhängers vorliegt, und wobei ein Strömungsgehäuse (4) mit einem Rotormantel (41) den Rotor, insbesondere vollumfänglich, umgibt,
wobei das Strömungsgehäuse (4) ferner mindestens einen Windtrichter (42), vorzugsweise zwei Windtrichter umfasst, der bzw. die dazu ausgelegt und eingerichtet ist/sind, einen Fahrtwind (W), insbesondere Fahrtwindluftstrom, zum Rotor (3) zu führen,
wobei ein erster Windtrichter (42) im Vorlauf des Rotormantels (41) angeordnet ist und sich in Richtung des Rotormantels (41) verjüngt, und
wobei ein zweiter Windtrichter (43) im Nachlauf des Rotormantels (41) angeordnet ist und sich in Richtung von dem Rotormantel (41) fort aufweitet,
wobei der erste Windtrichter (42) dazu ausgelegt und eingerichtet ist Fahrtwind (W) aufzunehmen und der zweite Windtrichter (43) dazu ausgelegt und eingerichtet ist den Ausgangsluftstrom (A) in Richtung des, der Fahrtrichtung (F) entgegensetzten, Fahrzeugendes zu leiten.

6. Anhänger (7) nach Anspruch 5, **dadurch gekennzeichnet, dass**
der Rotor (3) in dem Rotormantel (41) in einem Axialabstand zu den mehreren Windtrichtern (42, 43) angeordnet ist.

7. Anhänger (7) nach einem der Ansprüche 5 oder 6, **dadurch gekennzeichnet, dass** der mindestens eine Rotor (3) quer zur Rotordrehachse (D) schwenkbeweglich ist, vorzugsweise um eine insbesondere vertikale Schwenkachse (S) und/oder eine insbesondere horizontale Kippachse (K), insbesondere zwischen mindestens zwei Rotororientierungen, insbesondere relativ zur Anhängerhülle (71).

8. Flugzeug (8) umfassend ein Energieumwandlungssystem (1) zum Umwandeln von Windenergie erzeugt durch Fahrtwind des Flugzeugs in elektrische Energie, umfassend
mindestens einen Rotor (3) mit einer Rotordrehachse (D), umfassend mehrere sich radial zur Rotordrehachse (D) erstreckende Rotorblätter (31), wobei der Rotor (3) eine Anströmrichtung aufweist, die zur Rotordrehachse (D) korrespondiert, insbesondere parallel zur Rotordrehachse (D) ist, und
ein Strömungsgehäuse (4) mit einem Rotormantel (41), der den Rotor, insbesondere vollumfänglich, umgibt,
wobei die Rotordrehachse (D) im Wesentlichen parallel zur Längsachse (L) des Flugzeugs ausgerichtet ist,
wobei das Strömungsgehäuse (4) ferner mindestens einen Windtrichter (42), der dazu ausgelegt und eingerichtet ist, einen Fahrtwindluftstrom (W) zum Rotor (3) zu führen, umfasst,
wobei ein erster Windtrichter (42) im Vorlauf des Rotormantels (41) angeordnet ist und sich in Richtung des Rotormantels (41) verjüngt, wobei der erste Windtrichter (42) dazu ausgelegt und eingerichtet ist, Fahrtwind (W) aufzunehmen,
und
wobei ein zweiter Windtrichter (43) vorgesehen ist, der dazu ausgelegt und eingerichtet ist, den Ausgangsluftstrom (A) in Richtung des der Fahrtrichtung (F) entgegensetzten Endes des Flugzeugs zu leiten.

9. Verwendung eines Energieumwandlungssystems (1) nach einem der Ansprüche 1 bis 4 zur Verbesserung der Fahreigenschaften von Fahrzeugen, insbesondere Pkws, insbesondere durch Erhöhung des Anpressdruckes, insbesondere auf kurvigen Abschnitten der Straße.

10. Fahrtwindumlenkungssystem (100) für Fahrzeuge, insbesondere Pkw oder LKW, umfassend ein Energieumwandlungssystem (1) zum Umwandeln von Windenergie in elektrische Energie, insbesondere Windenergie erzeugt durch Fahrtwind des Fahrzeugs, umfassend
mindestens einen Rotor (3) mit einer Rotordrehachse (D), umfassend mehrere sich radial zur Rotordrehachse (D) erstreckende Rotorblätter (31), wobei der Rotor (3) eine Anströmrichtung aufweist, die zur Rotordrehachse (D) korrespondiert, insbesondere parallel zur Rotordrehachse (D) ist, und
einen Strömungskanal (48) mit einem Rotormantel (41), der den Rotor, insbesondere vollumfänglich, umgibt,
wobei die Rotordrehachse (D) und der Rotormantel im Wesentlichen vertikal an der Rückseite eines Fahrzeugs anordenbar sind,
wobei der Strömungskanal (48) mindestens einen oberhalb des Dachs eines Fahrzeugs, stromaufwärts in Bezug auf den Rotor anordenbaren ersten Windtrichter (42) umfasst, ausgelegt und eingerichtet, um Fahrtwind über einen ersten Krümmer (44) und den Rotormantel zum Rotor (3) zu führen,
ferner umfassend einen stromabwärts in Bezug auf den Rotor vorliegenden oder anordenbaren zweiten Windtrichter (43), eingerichtet und ausgelegt, um Fahrwind vom Rotor weg zu führen, und einen zweiten Krümmer (45) im Übergang vom Rotormantel zum zweiten Windtrichter, eingerichtet und ausgelegt, um dem Rotor entstammenden Fahrtwind weg vom Fahrtzeug zu befördern.

11. Fahrtwindumlenkungssystem (100) nach Anspruch 10, **dadurch gekennzeichnet, dass**
mindestens ein Rotor (3) in dem Rotormantel (41) in einem Axialabstand zu dem ersten und/oder zweiten Windtrichter (42, 43) angeordnet ist.

12. Kit-of-Parts für ein Fahrtwindumlenkungssystem (100) nach Anspruch 10 oder 11, umfassend
ein Grundgerüst, insbesondere in Form einer Fachwerkstruktur, für das Strömungsgehäuse (4) des Energieumwandlungssystems (1), umfassend den Rotormantel (41) und den ersten und zweiten Windtrichter (42, 43) und den ersten und zweiten Krümmer (44, 45), und mindestens eine flächige Barriereeinrichtung, wie ein Segel (46), ausgelegt und eingerichtet, um das Grundgerüst mindestens abschnittsweise zu umspannen, so dass Fahrtwind auf den mindestens einen Rotor (3) leitbar ist.

## Claims

1. A vehicle, in particular a passenger car or truck, having a front end and a rear end and a longitudinal axis (L) extending between the front end and the rear end, having at least one energy conversion system (1), in particular present outside the body of the vehicle, for converting wind energy generated by headwind of the vehicle into electrical energy, comprising
at least one rotor (3) having a rotor axis of rotation (D), comprising a plurality of rotor blades (31) extending radially with respect to the rotor axis of rotation (D), wherein the rotor (3) has an inflow direction which corresponds to the rotor axis of rotation (D), in particular is parallel to the rotor axis of rotation (D), and
a flow housing (4) with a rotor mantle (41), which surrounds the rotor, in particular entirely,
wherein the rotor rotation axis (D) is oriented substantially parallel to the longitudinal axis (L) or forms an acute angle with the longitudinal axis (L), wherein the intersection of the longitudinal axis (L) and the rotor axis of rotation (D) is closer to the rear end than to the front end of the vehicle, and wherein the energy conversion system (1) is closer to the rear end than to the front end of the vehicle, in particular is mounted on the rear (H),
wherein a first wind funnel (42) is arranged upstream of the rotor mantle (41) and tapers in the direction of the rotor mantle (41), and wherein a second wind funnel (43) is arranged downstream of the rotor mantle (41) and widens in the direction away from the rotor mantle (41),
wherein the first wind funnel (42) is adapted and arranged to receive headwind (W) and the second wind funnel (43) is adapted and arranged to direct the output airflow (A) in the direction of the vehicle end counter to the direction of travel (F),
wherein the second wind funnel (43) is arranged so as to be pivotably movable transverse to the vehicle longitudinal axis (L) about the end of the rotor mantle (41), such that the inflow angle of the output airflow (A) with respect to the guiding unit (50) of a vehicle changes.

2. The vehicle according to claim 1, **characterized in that**
the rotor (3) is arranged in the rotor mantle (41) at an axial distance from one or more wind funnels (42, 43).

3. The vehicle according to any one of claim 1 or 2, **characterized in that**
the second wind funnel (43) is arranged so as to be mechanically, electrically, pneumatically and/or hydraulically pivotably movable, transverse to the vehicle longitudinal axis (L) about the end of the rotor mantle (41), such that the inflow angle of the output airflow (A) with respect to the guiding unit (50), in particular spoiler, of a vehicle changes, in particular changes by up to approximately 45° on both sides of the vehicle longitudinal axis (L).

4. The vehicle according to any one of the preceding claims, **characterized in that** the energy conversion system (1) is mounted on the roof (62), a roof rack, a roof basket or a roof box of the vehicle via a mount (60) comprising at least one strut (60i).

5. A trailer (7), in particular a car trailer or truck trailer or train car at the end of a sequence of train cars, having a front end and a rear end and a longitudinal axis (L) extending between the front end and the rear end, comprising at least one energy conversion system (1) for converting wind energy into electrical energy, in particular wind energy generated by headwind of a vehicle, having at least one rotor (3) with a rotor axis of rotation (D), comprising a plurality of rotor blades (31) extending radially with respect to the rotor axis of rotation (D),
wherein the rotor axis of rotation (D) is oriented substantially parallel to the longitudinal axis (L) or forms an acute angle with the longitudinal axis (L), wherein the intersection of the longitudinal axis (L) and the rotor axis of rotation (D) is closer to the rear end than to the front end of the trailer, and wherein a flow housing (4) with a rotor mantle (41) surrounds the rotor, in particular entirely
wherein the flow housing (4) further comprises at least one wind funnel (42), preferably two wind funnels, which is/are adapted and arranged to guide a headwind (W), in particular a headwind airflow, to the rotor (3), wherein a first wind funnel (42) is arranged upstream of the rotor mantle (41) and tapers in the direction of the rotor mantle (41), and wherein a second wind funnel (43) is arranged downstream of the rotor mantle (41) and widens in the direction away from the rotor mantle (41),
wherein the first wind funnel (42) is adapted and arranged to receive headwind (W) and the second wind funnel (43) is adapted and arranged to direct the output airflow (A) in the direction of the vehicle end counter to the direction of travel (F).

6. The trailer (7) according to Claim 5, **characterized in that**
the rotor (3) is arranged in the rotor mantle (41) at an axial distance from the plurality of wind funnels (42, 43).

7. The trailer (7) according to any one of Claims 5or 6, **characterized in that**
the at least one rotor (3) is pivotably movable transverse to the rotor axis of rotation (D), preferably about an in particular vertical pivot axis (S) and/or an in particular horizontal tilt axis (K), in particular between at least two rotor orientations, in particular relative to the trailer shell (71).

8. An aircraft (8) comprising an energy conversion system (1)
for converting wind energy generated by headwind of the aircraft into electrical energy, comprising
at least one rotor (3) having a rotor axis of rotation (D), comprising a plurality of rotor blades (31) extending radially with respect to the rotor axis of rotation (D), wherein the rotor (3) has an inflow direction which corresponds to the rotor axis of rotation (D), in particular is parallel to the rotor axis of rotation (D), and
a flow housing (4) with a rotor mantle (41), which surrounds the rotor, in particular entirely,
wherein the rotor axis of rotation (D) is oriented substantially parallel to the longitudinal axis (L) of the aircraft, wherein the flow housing (4) further comprises at least one wind funnel (42), which is adapted and arranged to guide a headwind airflow (W) to the rotor (3),
wherein a first wind funnel (42) is arranged upstream of the rotor mantle (41) and tapers in the direction of the rotor mantle (41),
wherein the first wind funnel (42) is adapted and arranged to receive headwind (W), and
wherein a second wind funnel (43) is included, which is adapted and arranged to direct the output airflow (A) in the direction of the end of the aircraft counter to the direction of travel (F).

9. Use of an energy conversion system (1) according to any one of Claims 1 to 4 for improving the driving characteristics of vehicles, in particular passenger cars, in particular by increasing the contact pressure, in particular on curved sections of road.

10. A headwind deflection system (100) for vehicles, in particular passenger cars or trucks, comprising an energy conversion system (1) for converting wind energy into electrical energy, in particular wind energy generated by headwind of the vehicle, comprising
at least one rotor (3) having a rotor axis of rotation (D), comprising a plurality of rotor blades (31) extending radially with respect to the rotor axis of rotation (D), wherein the rotor (3) has an inflow direction which corresponds to the rotor axis of rotation (D), in particular is parallel to the rotor axis of rotation (D), and
a flow channel (48) with a rotor mantle (41), which surrounds the rotor, in particular entirely,
wherein the rotor axis of rotation (D) and the rotor mantle can be arranged substantially vertically on the rear side of a vehicle,
wherein the flow channel (48) comprises at least one first wind funnel (42) which can be arranged above the roof of a vehicle, upstream with respect to the rotor, and is adapted and arranged to guide headwind via a first manifold (44) and the rotor mantle to the rotor (3),further comprising a second wind funnel (43), which is present or can be arranged downstream with respect to the rotor, adapted and arranged to guide headwind away from the rotor, and a second manifold (45) in the transition from the rotor mantle to the second wind funnel, adapted and arranged to convey the headwind originating from the rotor away from the vehicle.

11. The headwind deflection system (100) according to Claim 10, **characterized in that** at least one rotor (3) is arranged in the rotor mantle (41) at an axial distance from the first and/or second wind funnel (42, 43).

12. Kit of parts for a headwind deflection system (100) according to any one of Claims 10 or 11, comprising
a base structure, in particular in the form of a framework structure, for the flow housing (4) of the energy conversion system (1), comprising the rotor mantle (41) and the first and second wind funnel (42, 43) and the first and second manifold (44, 45), and at least one planar barrier device, such as a sail (46), adapted and arranged to span the framework at least in sections, so that headwind can be directed to the at least one rotor (3).

## Revendications

1. Véhicule, en particulier véhicule de tourisme ou poids lourd, avec une extrémité avant et une extrémité arrière et un axe longitudinal (L) s'étendant entre l'extrémité avant et l'extrémité arrière, avec au moins un système de conversion d'énergie (1), en particulier présent à l'extérieur de la carrosserie du véhicule, pour convertir l'énergie éolienne produite par le vent de déplacement du véhicule en énergie électrique, comprenant
au moins un rotor (3) avec un axe de rotation de rotor (D), comprenant plusieurs pales de rotor (31) s'étendant radialement par rapport à l'axe de rotation de rotor (D), le rotor (3) présentant une direction d'afflux qui correspond à l'axe de rotation de rotor (D), en particulier est parallèle à l'axe de rotation de rotor (D), et
un boîtier d'écoulement (4) avec une enveloppe de rotor (41) qui entoure le rotor, en particulier sur toute la périphérie,
l'axe de rotation de rotor (D) étant orienté essentiellement parallèlement à l'axe longitudinal (L) ou formant un angle aigu avec l'axe longitudinal (L), le point d'intersection de l'axe longitudinal (L) et de l'axe de rotation de rotor (D) étant plus proche de l'extrémité arrière que de l'extrémité avant du véhicule et le système de conversion d'énergie (1) étant plus proche de l'extrémité arrière que de l'extrémité avant du véhicule, en particulier étant monté sur l'arrière (H),
un premier cône de vent (42) étant disposé dans l'avant de l'enveloppe de rotor (41) et se rétrécissant dans la direction de l'enveloppe de rotor (41), et
un deuxième cône de vent (43) étant disposé dans l'arrière de l'enveloppe de rotor (41) et s'élargissant dans la direction s'éloignant de l'enveloppe de rotor (41),
le premier cône de vent (42) étant conçu et agencé pour recevoir le vent de déplacement (W) et le deuxième cône de vent (43) étant conçu et agencé pour guider le flux d'air de sortie (A) dans la direction de l'extrémité du véhicule opposée à la direction de déplacement (F),
le deuxième cône de vent (43) étant disposé transversalement à l'axe longitudinal du véhicule (L) de pivotante autour de l'extrémité de l'enveloppe de rotor (41), de sorte que l'angle d'attaque du flux d'air de sortie (A) par rapport à l'empennage (50) d'un véhicule varie.

2. Véhicule selon la revendication 1, **caractérisé en ce que**
le rotor (3) est disposé dans l'enveloppe de rotor (41) à une distance axiale d'un ou de plusieurs cônes de vent (42, 43).

3. Véhicule selon l'une quelconque des revendications 1 ou 2, **caractérisé en ce que** le deuxième cône de vent (43) est disposé transversalement à l'axe longitudinal du véhicule (L) de manière mécaniquement, électriquement, pneumatiquement et/ou hydrauliquement pivotante autour de l'extrémité de l'enveloppe de rotor (41), de sorte que l'angle d'attaque du flux d'air de sortie (A) par rapport à l'empennage (50), en particulier le déflecteur, d'un véhicule varie, en particulier varie jusqu'à environ 45° des deux côtés de l'axe longitudinal du véhicule (L).

4. Véhicule selon l'une quelconque des revendications précédentes, **caractérisé en ce que**
le système de conversion d'énergie (1) est monté par le biais d'un support (60), comprenant au moins une entretoise (60i), sur le toit (62), un support de toit, une galerie de toit ou une boîte de toit du véhicule.

5. Remorque (7), en particulier remorque de voiture ou de poids lourd ou wagon de train à l'extrémité d'une suite de wagons de train, avec une extrémité avant et une extrémité arrière et un axe longitudinal (L) s'étendant entre l'extrémité avant et l'extrémité arrière, comprenant au moins un système de conversion d'énergie (1) pour convertir l'énergie éolienne en énergie électrique, en particulier l'énergie éolienne produite par le vent de déplacement d'un véhicule, avec au moins un rotor (3) avec un axe de rotation de rotor (D), comprenant plusieurs pales de rotor (31) s'étendant radialement par rapport à l'axe de rotation de rotor (D),
l'axe de rotation de rotor (D) étant orienté essentiellement parallèlement à l'axe longitudinal (L) ou formant un angle aigu avec l'axe longitudinal (L), le point d'intersection de l'axe longitudinal (L) et de l'axe de rotation de rotor (D) étant plus proche de l'extrémité arrière que de l'extrémité avant de la remorque, et un boîtier d'écoulement (4) avec une enveloppe de rotor (41) entourant le rotor, en particulier sur toute la périphérie,
le boîtier d'écoulement (4) comprenant en outre au moins un cône de vent (42), de préférence deux cônes de vent, qui est/sont conçu(s) et agencé(s) pour guider un vent de déplacement (W), en particulier un flux d'air de vent de déplacement, vers le rotor (3),
un premier cône de vent (42) étant disposé dans l'avant de l'enveloppe de rotor (41) et se rétrécissant dans la direction de l'enveloppe de rotor (41), et
un deuxième cône de vent (43) étant disposé dans l'arrière de l'enveloppe de rotor (41) et s'élargissant dans la direction s'éloignant de l'enveloppe de rotor (41),
le premier cône de vent (42) étant conçu et agencé pour recevoir le vent de déplacement (W) et le deuxième cône de vent (43) étant conçu et agencé pour guider le flux d'air de sortie (A) dans la direction de l'extrémité du véhicule opposée à la direction de déplacement (F).

6. Remorque (7) selon la revendication 5, **caractérisée en ce que**
le rotor (3) est disposé dans l'enveloppe de rotor (41) à une distance axiale des plusieurs cônes de vent (42, 43).

7. Remorque (7) selon l'une quelconque des revendications 5 ou 6, **caractérisée en ce que**
l'au moins un rotor (3) est mobile transversalement à l'axe de rotation de rotor (D), de préférence autour d'un axe de pivotement (S) en particulier vertical et/ou d'un axe de basculement (K) en particulier horizontal, en particulier entre au moins deux orientations de rotor, en particulier par rapport à l'enveloppe de remorque (71).

8. Avion (8) comprenant un système de conversion d'énergie (1)
pour convertir l'énergie éolienne produite par le vent de déplacement de l'avion en énergie électrique, comprenant
au moins un rotor (3) avec un axe de rotation de rotor (D), comprenant plusieurs pales de rotor (31) s'étendant radialement par rapport à l'axe de rotation de rotor (D), le rotor (3) présentant une direction d'afflux qui correspond à l'axe de rotation de rotor (D), en particulier est parallèle à l'axe de rotation de rotor (D), et
un boîtier d'écoulement (4) avec une enveloppe de rotor (41) qui entoure le rotor, en particulier sur toute la périphérie,
l'axe de rotation de rotor (D) étant orienté essentiellement parallèlement à l'axe longitudinal (L) de l'avion,
le boîtier d'écoulement (4) comprenant en outre au moins un cône de vent (42) qui est conçu et agencé pour guider un flux d'air de vent de déplacement (W) vers le rotor (3),
un premier cône de vent (42) étant disposé dans l'avant de l'enveloppe de rotor (41) et se rétrécissant dans la direction de l'enveloppe de rotor (41), le premier cône de vent (42) étant conçu et agencé pour recevoir le vent de déplacement (W),
et
un deuxième cône de vent (43) étant prévu, qui est conçu et agencé pour guider le flux d'air de sortie (A) dans la direction de l'extrémité de l'avion opposée à la direction de déplacement (F).

9. Utilisation d'un système de conversion d'énergie (1) selon l'une quelconque des revendications 1 à 4 pour améliorer les caractéristiques de déplacement de véhicules, en particulier de voitures particulières, en particulier par augmentation de la pression de contact, en particulier sur des sections curvilignes de la route.

10. Système de déviation de vent de déplacement (100) pour véhicules, en particulier voitures particulières ou poids lourd, comprenant un système de conversion d'énergie (1) pour convertir l'énergie éolienne en énergie électrique, en particulier l'énergie éolienne produite par le vent de déplacement du véhicule, comprenant au moins un rotor (3) avec un axe de rotation de rotor (D), comprenant plusieurs pales de rotor (31) s'étendant radialement par rapport à l'axe de rotation de rotor (D), le rotor (3) présentant une direction d'afflux qui correspond à l'axe de rotation de rotor (D), en particulier est parallèle à l'axe de rotation de rotor (D), et
un canal d'écoulement (48) avec une enveloppe de rotor (41) qui entoure le rotor, en particulier sur toute la périphérie,
l'axe de rotation de rotor (D) et l'enveloppe de rotor pouvant être disposés essentiellement verticalement sur le côté arrière d'un véhicule,
le canal d'écoulement (48) comprenant au moins un premier cône de vent (42) pouvant être disposé au-dessus du toit d'un véhicule, en amont par rapport au rotor, conçu et agencé pour guider le vent de déplacement par le biais d'un premier collecteur (44) et de l'enveloppe de rotor vers le rotor (3),
comprenant en outre un deuxième cône de vent (43) présent ou pouvant être disposé en aval par rapport au rotor, conçu et agencé pour guider le vent de déplacement à l'écart du rotor, et un deuxième collecteur (45) dans la transition de l'enveloppe de rotor au deuxième cône de vent, conçu et agencé pour transporter le vent de déplacement provenant du rotor à l'écart du véhicule.

11. Système de déviation de vent de déplacement (100) selon la revendication 10,
**caractérisé en ce que**
au moins un rotor (3) est disposé dans l'enveloppe de rotor (41) à une distance axiale du premier et/ou du deuxième cône de vent (42, 43).

12. Kit de pièces pour un système de déviation de vent de déplacement (100) selon la revendication 10 ou 11,
comprenant
une ossature de base, en particulier sous la forme d'une structure en treillis, pour le boîtier d'écoulement (4) du système de conversion d'énergie (1), comprenant l'enveloppe de rotor (41) et le premier et le deuxième cône de vent (42, 43) et le premier et le deuxième collecteur (44, 45), et au moins un dispositif de barrière plat, tel qu'une voile (46), conçu et agencé pour entourer l'ossature de base au moins par sections, de sorte que le vent de déplacement puisse être guidé sur l'au moins un rotor (3).
